# EUROPEAN PATENT SPECIFICATION

(11) **EP 1 840 548 B1**
(45) Date of publication and mention of the grant of the patent: **02.06.2010**
(21) Application number: 06111781.8
(22) Date of filing: 27.03.2006
(51) Int. Cl.: G01L 27/00

(54) **Apparatus and method for testing a pressure sensing mat**
Vorrichtung und Verfahren zum Testen einer druckempfindlichen Matte
Appareil et procédé de test d'un tapis de détection de pression

(43) Date of publication of application: 03.10.2007
(73) Proprietor: IEE INTERNATIONAL ELECTRONICS & ENGINEERING S.A., 6468 Echternach (LU)
(72) Inventor: Gruss, Christian, 54668, Prümzurlay (DE); Feustel, Dieter, 66663, Merzig (DE); Birk, Stefan, 54439, Saarburg (DE)
(74) Representative: Office Freylinger

(56) References cited:
- DE-A1- 19 705 799
- US-A- 5 571 973
- US-A- 5 821 415
- US-A- 5 900 530
- US-A- 6 029 524
- US-A1- 2004 074 281
- US-A1- 2005 120 773

## Description

### Technical field

The present invention generally relates to manufacturing of pressure sensing mats, in particular to a testing apparatus and a method for testing a pressure sensing mat.

### Background Art

Pressure sensing mats are well known and used, for instance, in the automotive field for classification of occupancy of a passenger seat of a vehicle. Occupancy classification with a pressure sensing mat is based on the recording of the pressure profile, which is exerted on the seat by the person or object occupying the seat. There are different types of pressure sensing mats known to those skilled in the art.

The most widespread type of pressure sensing mats comprises an array of individual pressure sensitive resistors, which are associated at several locations to the seating surface of the vehicle seat. The electrical resistance of these pressure sensitive resistors changes with the pressure applied thereon. The reading of the resistance values of the individual pressure sensitive resistors thus gives an indication on the pressure acting on each resistor and accordingly can be related to the weight acting on the seat. Furthermore the distribution of the pressure values over the surface of the seat can be related to the size or the form of a person or an object occupying the seat. Examples of pressure sensing mats of this kind can be found in WO-A-98/14345, WO-A-99/39168 and EP-A-0 891 898.

Another kind of pressure sensing mat is described in WO 2005/058653 A1. The disclosed pressure sensing mat comprises a sensing layer associated to a seating surface of a seat. Occupant classification is based on the determination of a locally changed electrical property of the sensing layer covering the sensing area of the device. This local change of electrical property is sensed between pairs of electrodes, which are connected to the sensing layer at a periphery of the sensing area. By measuring the electrical property between a plurality of pairs of electrodes, a two-dimensional profile of the electrical property can be recorded, which is correlated to the 2D pressure profile of a seat occupant in the seat.

After manufacturing of the pressure sensing mats a functional test or instrumental characterization of the sensors in the pressure sensing mat is necessary. In DE 100 39 774 C1, a method and measurement apparatus for measuring the seat mat for a vehicle seat has been disclosed. The reference document teaches applying a negative pressure to an inner cavity of a pressure sensing mat so that a pressure difference is established between that negative pressure inside the mat and the atmospheric pressure outside the mat. The electrical resistance of the pressure-sensitive resistors in response to the pressure difference is recorded in order to test the functionality of the pressure sensing mat.

The above method for testing a pressure sensing mat has several drawbacks. First of all, the mat to be tested must have an inner cavity and a venting conduit (preferably a single venting conduit) to connect the mat to a vacuum pump. This configuration is not given for all kinds of pressure sensing mats, so that the known method is limited to a particular kind of mats. Document US 5 900 530 discloses a method for testing pressure sensors that are fabricated to sense low pressures and calibrated by providing a controlled gas flow or leak to create a pressure during testing. Rather than placing the pressure in a sealed environment, a controlled leak of gas is used to induce a stable and controllable pressure region over the pressure sensor during testing. The stable low pressure region is monitored via a sensing tube.

### Object of the invention

It is an object of the present invention to provide for improved testing of pressure sensing mats. This object is achieved by an apparatus as claimed in claim 1 or a method as claimed in claim 8.

### General Description of the invention

According to a first aspect of the present invention, a testing apparatus for testing a pressure sensing mat comprises a support plate for arranging thereon a pressure sensing mat to be tested, a pressure source and a pressure chamber, fluidly connected to the pressure source for generating pressure in the pressure chamber, The pressure chamber is partially delimited by a substantially fluid-tight flexible membrane operationally arranged in facing relationship to the support plate. In operation, the flexible membrane transmits pressure generated in the pressure chamber onto the pressure sensing mat when the pressure sensing mat is arranged on the support plate. The apparatus further comprises a diagnostic circuit connectable to the pressure sensing mat for measuring an electrical response of the pressure sensing mat to the pressure transmitted thereon by the membrane.

As will be appreciated, the present apparatus is suitable for testing the functionality of various types of pressure sensing mats. According to the invention, the pressure sensing mat to be tested is placed on the support plate and arranged facing the flexible membrane of the pressure chamber. When an overpressure is applied to the pressure chamber, the pressure sensing mat is squeezed between the support plate and the membrane as the latter deflects under the action of the overpressure. The electrical response of the pressure sensing mat is detected by means of the diagnostic circuit. The present invention has several advantages with respect to DE 100 39 774 C1, such as, for instance, the possibility of testing a pressure sensing mat that has no venting conduit connecting the cells to the exterior, or a pressure sensing mat whose venting conduit does not end at the upper or lower surface of the mat but on a side thereof. Furthermore, the invention allows testing a pressure sensing mat with outer felt or fleece layers applied on the carrier foils, which was not possible with the prior art device.

The pressure source may, for instance, include a compressor or a pressure pump. Those skilled will be aware that the fluid could be air, another gas or a liquid. As the pressurised fluid does not come into direct contact with the pressure sensing mats on the support plate, there are no specific requirements to the type of fluid with respect to compatibility with the materials of the pressure sensing mats.

Preferably, the apparatus comprises an automatic pressure regulation system, for applying a well-defined amount of pressure to the pressure sensing mat and for a controlled pressurisation and/or depressurisation. The pressure regulation e.g. comprises one or more valves for regulating the pressure, one or more pressure sensors for monitoring the pressure and a control unit, which controls the pressure source and the valve(s) based on the reading of the pressure sensor(s). Still more preferably, the apparatus comprises an electronic control unit (e.g. computer, microprocessor) connected to the diagnostic circuit, to the pressure source and possibly to the pressure regulation circuit for controlling testing of a pressure sensing mat.

Advantageously, the pressure chamber comprises a substantially rigid casing, the casing having an opening operationally disposed in facing relationship to the support plate, the flexible membrane being mounted to the casing so as to seal the opening. In terms of wall thickness and material, the casing is constituted so as to withstand the overpressure in its interior. Generally, the invention is not limited to the form of the casing, which, for instance, may be cylindrical, hemispherical, rectangular, etc.; preferably, however, the opening of the casing has a substantially level boundary, such that the flexible membrane is substantially flat if the pressures inside and outside the pressure chamber are equal. The opening is advantageously dimensioned in accordance with the size of the pressure sensing mat to be tested. The casing may have an intermediate frame, removably arranged at the boundary of the casing, to which frame the membrane is directly attached. Such a removable frame may be useful if the membrane is damaged or wears out under the repeated use of the apparatus. The frame furthermore may define the size and the shape of the membrane, so that for testing different types of pressure sensing mats, one only has to replace the removable frame and the membrane.

The distance between the support plate and the pressure chamber advantageously corresponds to the thickness of the pressure sensing mat to be tested, so that the actual deflection of the membrane remains small during the testing procedure. This also contributes to a substantially homogeneous pressure profile on the mat to be tested and reduces wearing out of the membrane. Setting the appropriate distance may, for instance, be achieved by placing one or more spacers of adequate height between the support plate and a rigid part of the pressure chamber, or alternatively, in case the distance between the support plate and the pressure chamber is fixed, by placing one or more intermediate plates between the support plate and the pressure sensing mat. According to a preferred embodiment of the invention, however, the apparatus comprises actuator means for adjusting a distance between the support plate and the pressure chamber to the thickness of the pressure sensing mat to be tested.

Most preferably, the apparatus comprises indexing means associated with the support plate, the indexing means defining a specific position of the pressure sensing mat on the support plate. The skilled person will appreciate that the indexing means allow reproducible positioning of the pressure sensing mats on the support plate, preferably centrally with respect to the membrane. The indexing means can take the form of protrusions protruding from the support plate at specific locations so as to co-operate with openings at the border of or in the pressure sensing mats to be tested. The indexing means may alternatively comprise a recess of the support plate, which recess accommodates the pressure sensing mat to be tested. Those skilled will note that the above-mentioned spacer can also assume the function of the indexing means. Preferably, the indexing means and the pressure sensing mat to be tested form a substantially flat surface. Still more preferably, the indexing means extend circumferentially around the pressure sensing mat when in place, in such a way that the deflection of the membrane remains small over its entire surface.

According to a second aspect of the invention, a method is proposed for testing a pressure-sensing mat. A pressure sensing mat to be tested is arranged on a support plate and connected to a diagnostic circuit. The support plate with the pressure sensing mat is arranged in facing relationship with a substantially fluid-tight flexible membrane, which partly delimits a pressure chamber. The pressure chamber is fluidly connected to a pressure source. Overpressure is generated in the pressure chamber by operating the pressure source, whereby the flexible membrane transmits pressure onto the pressure sensing mat arranged on the support plate. The electrical response of the pressure sensing mat to the pressure transmitted thereon by the membrane is measured by means of the diagnostic circuit. As will be appreciated, the present method is advantageously carried out by means of the apparatus generally described above.

According to a preferred embodiment of the method, the distance between the support plate and the pressure chamber is adjusted to a thickness of the pressure sensing mat.

### Brief Description of the Drawings

Further details and advantages of the present invention will be apparent from the following not limiting detailed description with reference to the attached drawings, wherein:
- Fig. 1:: is a schematic view through of an apparatus according to a preferred embodiment of the invention with a pressure sensing mat of a first type arranged therein;
- Fig. 2:: is a schematic partial cross-sectional view of the apparatus of Fig. 1 with a pressure sensing mat of a second type arranged therein;
- Fig. 3:: is a schematic partial cross-sectional view through the apparatus of Fig. 1 during calibration;
- Fig. 4:: is a high-level block schematic diagram illustrating interaction of components during testing of a pressure sensing mat.

### Description of Preferred Embodiments

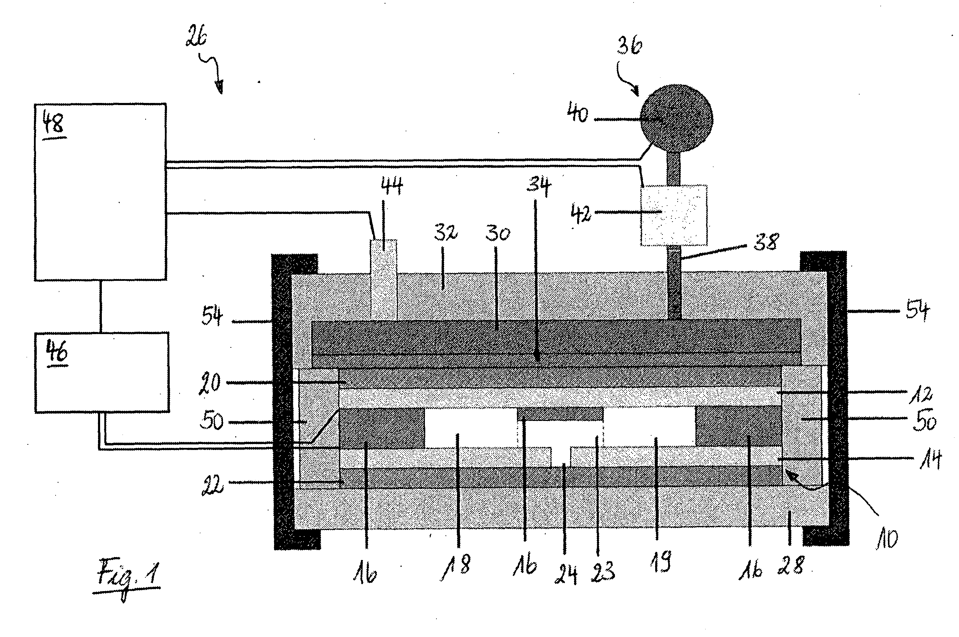

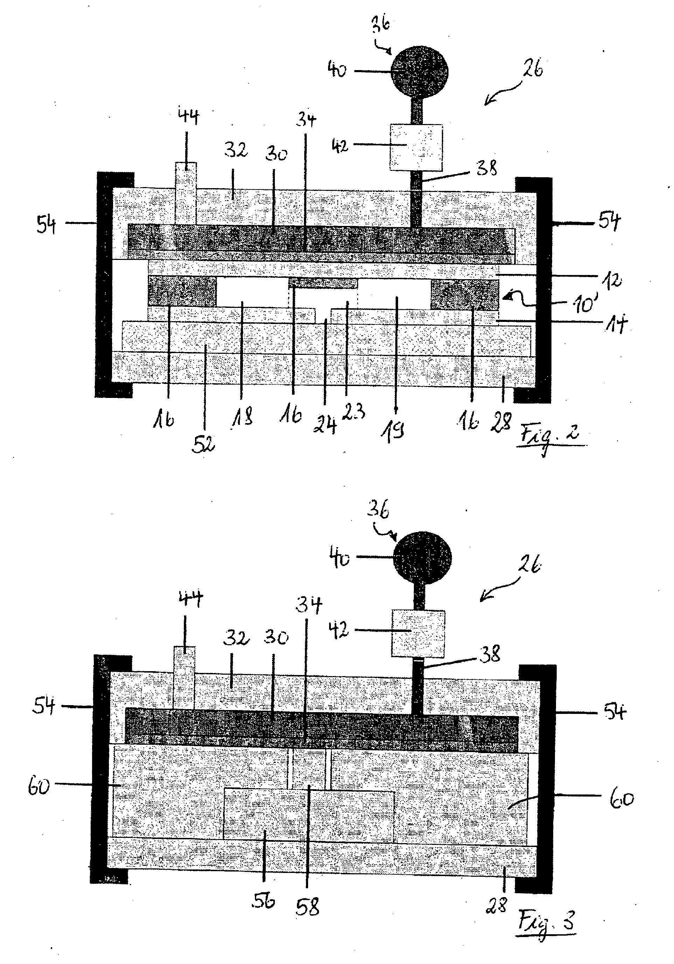

In the now following description, the apparatus and process for testing the functionality of a pressure sensing mat will be discussed with reference to specific types of pressure sensing mats. The skilled person will note, however, that the invention is not limited to the types of pressure sensing mats discussed herein. On the contrary, the present invention is suited for testing various types of flexible pressure sensing mats. For illustration, the pressure sensing mat 10 comprises a first carrier foil 12 and a second carrier foil 14, which are arranged at a certain distance by means of a spacer layer 16. The spacer layer 16 is provided with openings, defining the cells or cavities 18, 19 with the pressure sensitive resistors. The electric components (electrodes, pressure-sensitive layer, etc.) of the cells are not shown, for sake of clarity of the drawings. The pressure sensing mat 10 may, for instance, comprise felt layers 20, 22 associated to the respective outer surfaces of the carrier foils 12, 14, as illustrated in Fig. 1. Fig. 2 shows a pressure sensing mat 10' without felt layers. Under pressure, the carrier foils 12, 14 are resiliently pressed together, which causes an electrical response if the electric circuits of the pressure sensing mat 10 are intact and properly connected to a driver circuit. In the shown pressure mats 10, 10', a venting conduit 23 fluidly interconnects the cell volumes 18, 19. A ventilation hole 24 connects the venting conduit 23 with the exterior. Depending on the type of pressure sensing mats, the venting conduits 23 may be absent. The ventilation hole 24 may be sealed with a Gore-Tex® seal for protecting the electronic circuits in the cells from water. Such a seal, however, has little or no influence on the test.

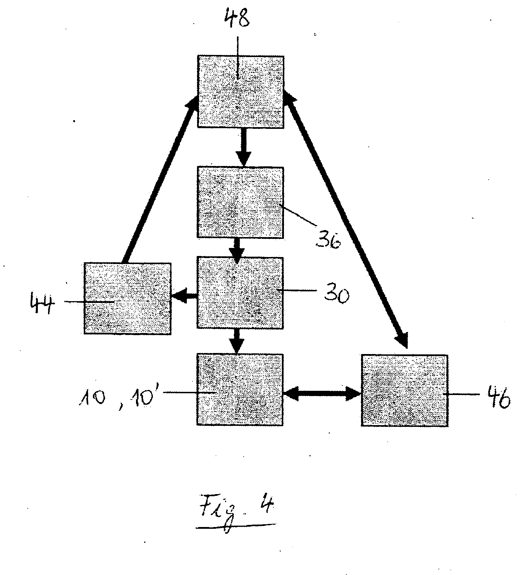

The testing apparatus 26 for testing the functionality of pressure sensing mats comprises a substantially flat, rigid support plate 28, on which the pressure sensing mats 10, 10' can be arranged. A pressure chamber 30 is arranged in facing relationship with the support plate 28. The pressure chamber 30 comprises a substantially rigid casing 32, which has an opening on the side that faces the support plate 28. The opening of the casing 32 is sealed with a flexible membrane 34. As long as the pressure inside the pressure chamber 30 and the pressure outside the pressure chamber 30 are equal, the membrane 34 remains substantially flat. If overpressure is applied to the pressure chamber 30, i.e. if the pressure inside the pressure chamber 30 is higher than the pressure outside, the flexible membrane 34 resiliently deflects outwardly from the pressure chamber 30. To apply pressure to the pressure chamber 30, the latter is fluidly connected to an overpressure source 36 e.g. by conduit 38. The overpressure source 36 comprises a compressor or a pressure pump 40 to supply pressurised fluid (e.g. air) to the pressure chamber 30 and a valve 42 for regulating the pressure to a predefined level. Pressure sensors 44 are arranged in the pressure chamber 30 for monitoring the pressure. The apparatus 26 comprises a diagnostic circuit 46 (shown in Figs. 1 and 4) operationally connectable to the pressure sensing mats 10, 10' to be tested for measuring their electrical response to the applied pressure. The apparatus 26 furthermore comprises a computer 48 connected to the pressure source 36, the diagnostic circuit 46 and the pressure sensors 44 of the pressure chamber 30 for controlling the testing process.

For testing, the pressure sensing mat 10 is arranged on the support plate 28 so as to face the membrane 34 of the pressure chamber 30, to which overpressure is not yet applied. The pressure sensing mat 10 is preferably brought close to the membrane 34, more preferably in contact to it. To provide for high reproducibility of the functionality test, the apparatus 26 comprises indexing means 50 fixed on the support plate 28, which define a specific position of the pressure sensing mat 10 on the support plate 28. As shown in Fig. 1, the indexing means 50 preferably have substantially the same height as the pressure sensing mat 10, so that the surface facing the membrane 34 is relatively even. Those skilled will appreciate that local bulging out of the membrane 34 may thus be efficiently prevented. The indexing means 50 are disposed on the support plate 28 in such a way that the pressure sensing mat 10 is arranged substantially centrally with respect to the membrane 34; as a consequence, the pressure profile operationally caused by the membrane 34 on the pressure sensing mat 10 is substantially homogeneous.

Prior to applying pressure, the pressure sensing mat 10 is electrically connected to the diagnostic circuit 46, which detects the electrical response of the pressure sensing mat 10 to pressure applied to it. In case of a pressure sensing mat with individual pressure sensitive resistors, the diagnostic circuit 46 preferably detects the electrical response of each one of the pressure sensitive resistors.

When the pressure sensing mat 10 is correctly placed and electrically connected to the diagnostic circuit 46, overpressure is applied to the pressure chamber 30 by pressure source 36. As the pressure inside the pressure chamber 30 increases, the membrane 34 deflects until equilibrium of forces is reached again. The membrane 34 thereby transmits the pressure inside the pressure chamber 30 at least partially to the pressure sensing mat 10. Under the pressure of the membrane 34, the carrier foil 12 deflects towards and eventually contacts the carrier foil 14 in the regions of the cells 18, 19. Depending on the circuit implemented on the pressure sensing mat, this may e.g. result in a change of resistance or capacitance or a switching action. The diagnostic circuit 46 reads the electrical response of the pressure sensing mat 10, which is stored in the computer 48 as a function of the pressure in the pressure chamber 30. Calibration of the apparatus 26 allows determining the pressure acting directly on the pressure sensing mat 10 as a function of the pressure inside the pressure chamber 30.

Fig. 2 illustrates the testing of a pressure sensing mat 10' having a different thickness as the mat 10. To arrange the pressure sensing mat 10' close to the flexible membrane 34, an intermediate plate 52 is arranged between the pressure sensing mat and the support plate. Preferably, however, the apparatus comprises actuators (not shown) for adjusting the distance of the support plate 28 and the pressure chamber 30 to the thickness of the pressure sensing mat to be tested. Such actuators may, for instance, be arranged between the support plate 28 and the frame elements 54, which mechanically connect the casing 32 of the pressure chamber 30 and the support plate 28.

Fig. 4 illustrates the interaction of components during testing of a pressure sensing mat 10, 10'. The pressure sensing mat 10, 10' to be tested is connected to the diagnostic circuit 46, which measures the electrical response of the mat 10, 10'. The pressure sensing mat 10, 10' is subjected to a pressure mechanically transmitted by the flexible membrane of the pressure chamber 30. The pressure inside the pressure chamber 30 is applied by the pressure source 36 and monitored by the pressure sensor 44. Computer 48 controls the diagnostic circuit 46 and the pressure source 36 inclusive the pressure regulation system. The computer 48 furthermore collects data provided by the pressure sensors 44 and the diagnostic circuit 46. The desired pressure to be applied to the pressure chamber 30 can thus be controlled via the computer 48.

Calibration of the testing apparatus is illustrated in Fig. 3. A force meter 56 is arranged on the support plate 28. On the force meter 56 is placed a cylindrical element 58 such that the total height of the force meter 56 and the cylindrical element 58 substantially equals the thickness of the pressure sensing mat, for which the calibration is done. A template 60 is used to achieve a flat surface contact with the membrane 34. Knowing the contact surface of the cylindrical element 58 with the membrane, the pressure measured by the pressure sensor 44 in the pressure chamber 30 and the force value measured by the force meter 56, one can determine the correlation between pressure inside the chamber 30 and pressure transmitted on the pressure sensing mat to be tested.

Although some specific types of pressure sensing mats have been described with respect to the drawings, those skilled will understand that the apparatus and the method according to the present invention are generally applicable to any pressure sensing mat that produces an electric signal in response to pressure being applied to the pressure sensing mat.

## Claims

1. A testing apparatus (26) for testing a pressure sensing mat (10), comprising:
a support plate (28) for arranging thereon a pressure sensing mat (10) to be tested,
a pressure source (36);
a pressure chamber (30), fluidly connected to said pressure source (36) for generating pressure in said pressure chamber;
a diagnostic circuit (46) connectable to said pressure sensing mat for measuring an electrical response of said pressure sensing mat to the pressure transmitted thereon;
**characterized in that**
said pressure chamber is partially delimited by a substantially fluid-tight flexible membrane (34) arranged in facing relationship to said support plate (28) in such a way that said flexible membrane transmits pressure generated in said pressure chamber onto said pressure sensing mat when said pressure sensing mat is arranged on said support plate by squeezing said pressure sensing mat (10) between said support plate and said membrane as the latter deflects under the action of overpressure.

2. The apparatus according to claim 1, wherein said pressure source includes a compressor or a pressure pump (40).

3. The apparatus according to claim 1 or 2, comprising a pressure regulation system (42,44,48).

4. The apparatus according to claim 1, 2 or 3, wherein said pressure chamber comprises a substantially rigid casing (32), said casing having an opening operationally disposed in facing relationship to said support plate, and wherein said flexible membrane is mounted to said casing so as to seal said opening.

5. The apparatus according to any one of claims 1 to 4, comprising actuator means for adjusting a distance between said support plate and said pressure chamber to a thickness of the pressure sensing mat (10) to be tested.

6. The apparatus according to claim any one of claims 1 to 5, comprising indexing means (50) defining a specific position of said pressure sensing mat on said support plate.

7. The apparatus according to any one of claims 1 to 6, comprising an electronic control unit (48) connected to said diagnostic circuit and to said pressure source for controlling testing of a pressure sensing mat (10).

8. A method of testing a pressure-sensing mat comprising the steps:
providing a pressure sensing mat (10) to be tested;
providing a support plate (28);
arranging said pressure sensing mat on said support plate;
connecting said pressure sensing mat to a diagnostic circuit (46);
providing a pressure chamber (30), fluidly connected to a pressure source (40) for generating pressure in said pressure chamber;
**characterized in that**
said pressure chamber is partially delimited by a substantially fluid-tight flexible membrane (34) and by the steps:
arranging said flexible membrane in facing relationship to said support plate;
generating overpressure in said pressure chamber by operating said pressure source, thereby causing said flexible membrane to transmit pressure onto said pressure sensing mat arranged on said support plate by squeezing said pressure sensing mat between said support plate and said membrane; and
measuring, by means of said diagnostic circuit, an electrical response of said pressure sensing mat to the pressure transmitted thereon by said membrane.

9. A method according to claim 8, comprising adjusting a distance between said support plate and said pressure chamber to a thickness of said pressure sensing mat.

## Patentansprüche

1. Testvorrichtung (26) zum Testen einer druckempfindlichen Matte (10), Folgendes umfassend:
eine Tragplatte (28) zum Anordnen einer zu testenden druckempfindlichen Matte (10) darauf;
eine Druckquelle (36);
eine Druckkammer (30), die in Fluidverbindung mit der Druckquelle (36) steht, um Druck in der Druckkammer zu erzeugen;
eine Diagnoseschaltung (46), die an die druckempfindliche Matte anschließbar ist, um eine elektrische Antwort der druckempfindlichen Matte auf den darauf übertragenen Druck zu messen;
**dadurch gekennzeichnet, dass**
die Druckkammer teilweise durch eine im Wesentlichen fluiddichte, flexible Membran (34) begrenzt ist, die gegenüber der Tragplatte (28) derart angeordnet ist, dass die flexible Membran den in der Druckkammer erzeugten Druck auf die druckempfindliche Matte überträgt, wenn die druckempfindliche Matte auf der Tragplatte angeordnet ist, indem die druckempfindliche Matte (10) zwischen der Tragplatte und der Membran zusammengedrückt wird, während sich letztere unter der Wirkung des Überdrucks durchbiegt.

2. Vorrichtung nach Anspruch 1, wobei die Druckquelle einen Kompressor oder eine Druckpumpe (40) umfasst.

3. Vorrichtung nach Anspruch 1 oder 2, umfassend ein Druckregelsystem (42, 44, 48).

4. Vorrichtung nach Anspruch 1, 2 oder 3, wobei die Druckkammer ein im Wesentlichen starres Gehäuse (32) umfasst, wobei das Gehäuse eine Öffnung aufweist, die wirksam gegenüber der Tragplatte angeordnet ist, und wobei die flexible Membran derart am Gehäuse angebracht ist, dass sie die Öffnung abdichtet

5. Vorrichtung nach irgendeinem der Ansprüche 1 bis 4, umfassend Betätigungsmittel zum Einstellen eines Abstands zwischen der Tragplatte und der Druckkammer auf eine Dicke der zu testenden druckempfindlichen Matte (10)

6. Vorrichtung nach irgendeinem der Ansprüche 1 bis 5, umfassend Rastmittel (50), die eine spezifische Position der druckempfindlichen Matte auf der Tragplatte definieren

7. Vorrichtung nach irgendeinem der Ansprüche 1 bis 6, umfassend ein elektronisches Steuergerät (48), das an die Diagnoseschaltung und an die Druckquelle angeschlossen ist, um das Testen einer druckempfindlichen Matte (10) zu steuern.

8. Verfahren zum Testen einer druckempfindlichen Matte, umfassend folgende Schritte:
Bereitstellen einer zu testenden druckempfindlichen Matte (10);
Bereitstellen einer Tragplatte (28);
Anordnen der druckempfindlichen Matte auf der Tragplatte;
Anschließen der druckempfindlichen Matte an eine Diagnoseschaltung (46);
Bereitstellen einer Druckkammer (30), die in Fluidverbindung mit einer Druckquelle (40) steht, um Druck in der Druckkammer zu erzeugen;
**dadurch gekennzeichnet, dass**
die Druckkammer teilweise durch eine im Wesentlichen fluiddichte, flexible Membran (34) begrenzt ist, und **gekennzeichnet durch** folgende Schritte:
Anordnen der flexiblen Membran gegenüber der Tragplatte;
Erzeugen von Überdruck in der Druckkammer **durch** Betätigen der Druckquelle, wodurch bewirkt wird, dass die flexible Membran Druck auf die auf der Tragplatte angeordnete druckempfindliche Matte überträgt, indem die druckempfindliche Matte zwischen der Tragplatte und der Membran zusammengedrückt wird; und
Messen, mittels der Diagnoseschaltung, einer elektrischen Antwort der druckempfindlichen Matte auf den **durch** die Membran darauf übertragenen Druck.

9. Verfahren nach Anspruch 8, umfassend das Einstellen eines Abstands zwischen der Tragplatte und der Druckkammer auf eine Dicke der druckempfindlichen Matte

## Revendications

1. Appareil de test (26) pour tester un tapis de détection de pression (10), comprenant :
une plaque support (28) pour agencer sur celle-ci un tapis de détection de pression (10) devant être testé ;
une source de pression (36) ;
une chambre de pression (30), connectée en communication de fluide à ladite source de pression (36) pour générer une pression dans ladite chambre de pression ;
un circuit de diagnostic (46) connectable audit tapis de détection de pression pour mesurer une réponse électrique dudit tapis de détection de pression à la pression transmise sur celui-ci ;
**caractérisé en ce que**
ladite chambre de pression est partiellement délimitée par une membrane flexible (34) substantiellement étanche aux fluides agencée selon une relation face à face par rapport à ladite plaque support (28), de telle manière que ladite membrane flexible transmet une pression générée dans ladite chambre de pression sur ledit tapis de détection de pression lorsque ledit tapis de détection de pression est agencé sur ladite plaque support par coincement dudit tapis de détection de pression (10) entre ladite plaque support et ladite membrane lorsque cette dernière fléchit sous l'action d'une surpression.

2. Appareil selon la revendication 1, dans lequel ladite source de pression inclut un compresseur ou une pompe de pression (40)

3. Appareil selon la revendication 1 ou 2, comprenant un système de régulation de pression (42, 44, 48)

4. Appareil selon la revendication 1, 2 ou 3, dans lequel ladite chambre de pression comprend un boîtier (32) substantiellement rigide, ledit boîtier ayant une ouverture opérationnellement disposée selon une relation face à face par rapport à ladite plaque support, et dans lequel ladite membrane flexible est montée sur ledit boîtier de façon à fermer de façon étanche ladite ouverture

5. Appareil selon l'une quelconque des revendications 1 à 4, comprenant un moyen d'actionneur pour ajuster une distance entre ladite plaque support et ladite chambre de pression à une épaisseur du tapis de détection de pression (10) devant être testé

6. Appareil selon l'une quelconque des revendications 1 à 5, comprenant un moyen d'indexation (50) définissant une position spécifique dudit tapis de détection de pression sur ladite plaque support

7. Appareil selon l'une quelconque des revendications 1 à 6, comprenant une unité de commande électronique (48) connectée audit circuit de diagnostic et à ladite source de pression pour commander un test dudit tapis de détection de pression (10)

8. Procédé de test d'un tapis de détection de pression comprenant les étapes de :
prévision d'un tapis de détection de pression (10) devant être testé ;
prévision d'une plaque support (28) ;
agencement dudit tapis de détection de pression sur ladite plaque support ;
connexion dudit tapis de détection de pression à un circuit de diagnostic (46) ;
prévision d'une chambre de pression (30), connectée en communication de fluide à une source de pression (40) pour générer une pression dans ladite chambre de pression ;
**caractérisé en ce que**
ladite chambre de pression est partiellement délimitée par une membrane flexible (34) substantiellement étanche aux fluides et par les étapes de:
agencement de ladite membrane flexible en relation face à face par rapport à ladite plaque support ;
génération d'une surpression dans ladite chambre de pression en utilisant ladite source de pression, faisant ainsi que ladite membrane flexible transmet une pression sur ledit tapis de détection de pression agencé sur ladite plaque support par coincement dudit tapis de détection de pression entre ladite plaque support et ladite membrane ; et
mesure, au moyen dudit circuit de diagnostic, d'une réponse électrique dudit tapis de détection de pression à la pression transmise sur celui-ci par ladite membrane

9. Procédé selon la revendication 8, comprenant l'ajustement d'une distance entre ladite plaque support et ladite chambre de pression à une épaisseur dudit tapis de détection de pression
